(19) Europäisches Patentamt / European Patent Office / Office européen des brevets

(11) **EP 4 177 223 A1**

(12) **EUROPEAN PATENT APPLICATION**
published in accordance with Art. 153(4) EPC

(43) Date of publication:
**10.05.2023 Bulletin 2023/19**

(21) Application number: **21838112.7**

(22) Date of filing: **05.07.2021**

(51) International Patent Classification (IPC):
*C02F 1/44* (2023.01)      *C02F 1/52* (2023.01)

(52) Cooperative Patent Classification (CPC):
**C02F 1/44; C02F 1/52; Y02W 10/10**

(86) International application number:
**PCT/JP2021/025301**

(87) International publication number:
**WO 2022/009833 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2020  JP 2020116046**

(71) Applicant: **Kubota Corporation
Osaka-shi, Osaka 556-8601 (JP)**

(72) Inventors:
• **OKAJIMA Yasunobu
  Amagasaki-shi Hyogo 661-8567 (JP)**
• **TANAKA Ken
  Amagasaki-shi Hyogo 661-8567 (JP)**

(74) Representative: **Van Breda, Jacobus
Octrooibureau Los & Stigter B.V.
Weteringschans 96
1017 XS  Amsterdam (NL)**

(54) **METHOD OF ADMINISTERING COAGULANT**

(57)    Defining one treatment cycle as comprising a filtration step J for using a filter membrane to filter water to be treated in a filtration tank and a filtration stopping step K for stopping filtration, this method, for administering a coagulant in water treatment that involves repeating the treatment cycle C1 to C5 to treat water to be treated, starts administration of the coagulant into the filtration tank when the membrane load index becomes greater than or equal to a first threshold value, wherein the membrane load index is defined as the amount of increase in transmembrane pressure per unit time in the filtration step J.

Fig. 2

EP 4 177 223 A1

**Description**

**Technical Field**

The present invention relates to a method of administering a coagulant to be administered in water to be filtered at the time of performing water treatment by filtering the water to be filtered with a filter membrane.

**Background Art**

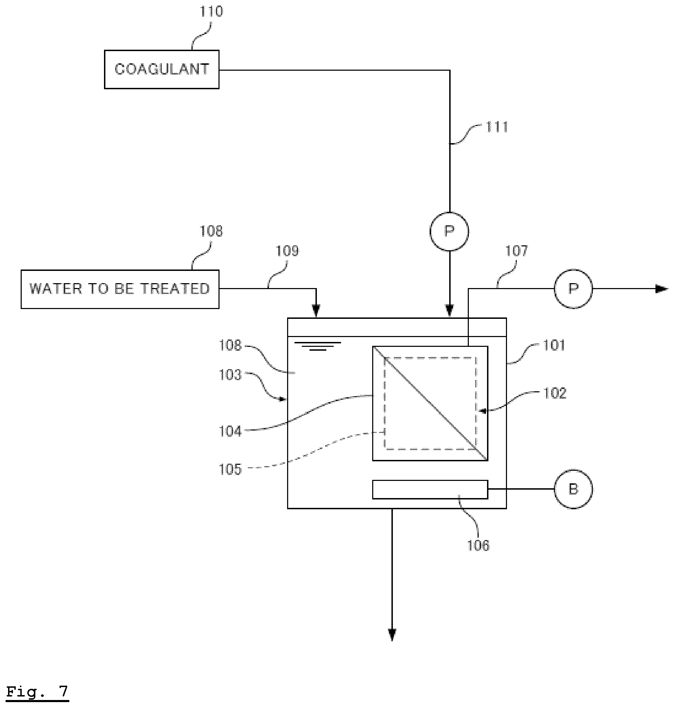

Conventionally, as this kind of water treatment, for example, the membrane separation activated sludge method is known. In the membrane separation activated sludge method, as shown in FIG. 7, a processing device 103 is used that provides a membrane separator 102 in a filtration tank 101.

The membrane separator 102 includes a plurality of membrane elements 105 arranged in a casing 104, and an air diffuser 106 that diffuses air from below the membrane elements 105.

Each of the membrane elements 105 is formed by welding a filter membrane on both front and rear surfaces of a filter plate. The permeated water (treated water) that permeates from the upstream side to the downstream side through a filter membrane is sent out to the outside of the filtration tank 101 through a permeated water extraction flow path 107. Additionally, the water to be filtered 108, such as waste water, is supplied from a supply flow path 109 into the filtration tank 101, and a coagulant 110 is administered from a coagulant administration flow path 111 to the water to be filtered 108 in the filtration tank 101.

Accordingly, by supplying the water to be filtered 108 from the supply flow path 109 into the filtration tank 101, and filtering the water to be filtered 108 in the filtration tank 101 with the membrane elements 105, solids-liquid separation of the water to be filtered 108 into sludge and permeated water is performed, and the permeated water is extracted from the permeated water extraction flow path 107 to the outside of the filtration tank 101. On this occasion, the surfaces of the filter membranes of the membrane elements 105 are washed by diffusing air with the air diffuser 106.

Additionally, by administering the coagulant 110 from the coagulant administration flow path 111 to the water to be filtered 108 in the filtration tank 101, the coagulant 110 sticks to the sludge surface, and adsorbs organic matters, such as persistent substances. Therefore, membrane blocking of the filter membranes of the membrane elements 105 can be prevented.

Refer to Japanese Patent Laid-Open No. 2015-163388 A for the processing devices 103 as described above.

**Summary of Invention**

Technical Problem

However, in the aforementioned related system, when administering the coagulant 110 to the water to be filtered 108 in the filtration tank 101, an optimum timing for starting administration of the coagulant 110 is not clear. Therefore, there is a risk that the timing for starting administration of the coagulant 110 is too early, and the coagulant 110 is excessively administered, or that the timing for starting the administration of the coagulant 110 is too late, and the dose of the coagulant 110 is insufficient.

Additionally, after starting the administration of the coagulant 110, an optimum timing for stopping the administration of the coagulant 110 is not clear. Therefore, there is a risk that the timing for stopping the administration of the coagulant 110 is too late, and the coagulant 110 is excessively administered, or that the timing for stopping the administration of the coagulant 110 is too early, and the dose of the coagulant 110 is insufficient.

An object of the present invention is to provide a method of administering a coagulant that can start administration of the coagulant at an optimum timing, and can stop the administration of the coagulant at an optimum timing after starting the administration of the coagulant.

Solution to Problem

A method of administering a coagulant in water treatment of the present invention defines one treatment cycle as including a filtration step for using a filter membrane to filter water to be treated in a filtration tank, and a filtration stopping step for stopping filtration, and

repeats the treatment cycle to treat the water to be treated, wherein a membrane load index is defined as an amount of increase in transmembrane pressure per time in the filtration step, and
administration of the coagulant into the filtration tank is started when the membrane load index becomes greater than or equal to a first threshold value.

According to this, the larger the membrane load index, the larger the amount of foulant (soluble organic matters, etc.) contained in the water to be treated. Thus, the permeation ratio resistance at the time when the foulant adheres to the filter membrane surfaces is increased. Therefore, the permeation resistance at the time of permeating the filter membranes is increased, and the load applied to the filter membranes is increased.

Conversely, the smaller the membrane load index, the smaller the amount of the foulant contained in the water to be treated. Thus, the permeation ratio resistance at the time when the foulant adheres to the filter membrane surfaces is decreased. Therefore, the permeation resistance at the time of permeating the filter membranes is decreased, and the load applied to the filter membranes is decreased.

In this manner, since the load applied to the filter membranes can be objectively evaluated based on the membrane load index at the time of the filtration step, and the administration of the coagulant is started by using this membrane load index as an index, the administration of the coagulant can be started at an optimum timing.

A method of administering a coagulant in water treatment of the present invention defines one treatment cycle as including a filtration step for using a filter membrane to filter water to be treated in a filtration tank, and a filtration stopping step for stopping filtration, and

repeats the treatment cycle to treat the water to be treated, wherein a membrane load index is defined as an amount of increase in transmembrane pressure per time in the filtration step,
a time point at which a membrane-filtered water amount per time after starting the filtration step of a current treatment cycle is stabilized is defined as a first time point,
the transmembrane pressure at the first time point is defined as a first transmembrane pressure,
a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
the difference between the first transmembrane pressure and the second transmembrane pressure is defined as an accumulated additional resistance, and
when the membrane load index becomes greater than or equal to a first threshold value, and the accumulated additional resistance becomes greater than or equal to a second threshold value, administration of the coagulant into the filtration tank is started.

A method of administering a coagulant in water treatment of the present invention defines one treatment cycle as including a filtration step for using a filter membrane to filter water to be treated in a filtration tank, and a filtration stopping step for stopping filtration, and repeats the treatment cycle to treat the water to be treated, wherein a membrane load index is defined as an amount of increase in transmembrane pressure per time in the filtration step,

a time point at which a membrane-filtered water amount per time after starting the filtration step of a current treatment cycle is stabilized is defined as a first time point,
the transmembrane pressure at the first time point is defined as a first transmembrane pressure,
a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
a value obtained by dividing the difference between the first transmembrane pressure and the second transmembrane pressure by a time period from the second time point to the first time point is defined as an accumulated additional resistance, and when the membrane load index becomes greater than or equal to a first threshold value, and the accumulated additional resistance becomes greater than or equal to a second threshold value, administration of the coagulant into the filtration tank is started.

A method of administering a coagulant in water treatment of the present invention defines one treatment cycle as including a filtration step for using a filter membrane to filter water to be treated in a filtration tank, and a filtration stopping step for stopping filtration, and

repeats the treatment cycle to treat the water to be treated, wherein a membrane load index is defined as an amount of increase in transmembrane pressure per time in the filtration step,
a time point at which a membrane-filtered water amount per time after starting the filtration step of a current treatment cycle is stabilized is defined as a first time point,
the transmembrane pressure at the first time point is defined as a first transmembrane pressure,
a value obtained by dividing the first transmembrane pressure by a membrane-filtered water amount per membrane area and per time is defined as a first filtration resistance value,
a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
a value obtained by dividing the second transmembrane pressure by the membrane-filtered water amount per membrane area and per time is defined as a second filtration resistance value,
the difference between the first filtration resistance value and the second filtration resistance value is defined as an accumulated additional resistance, and
when the membrane load index becomes greater than or equal to a first threshold value, and the accumulated additional resistance becomes greater than or equal to a second threshold value, administration of the coagulant into the filtration tank is started.

A method of administering a coagulant in water treatment of the present invention defines one treatment cycle as including a filtration step for using a filter membrane to filter water to be treated in a filtration tank, and a filtration stopping step for stopping filtration, and

repeats the treatment cycle to treat the water to be treated, wherein a membrane load index is defined as an amount of increase in transmembrane pressure per time in the filtration step,
a time point at which a membrane-filtered water amount per time after starting the filtration step of a current treatment cycle is stabilized is defined as a first time point,
the transmembrane pressure at the first time point is defined as a first transmembrane pressure,
a value obtained by dividing the first transmembrane pressure by a membrane-filtered water amount per membrane area and per time is defined as a first filtration resistance value,
a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
a value obtained by dividing the second transmembrane pressure by the membrane-filtered water amount per membrane area and per time is defined as a second filtration resistance value,
a value obtained by dividing the difference between the first filtration resistance value and the second filtration resistance value by a time period from the second time point to the first time point is defined as an accumulated additional resistance, and
when the membrane load index becomes greater than or equal to a first threshold value, and the accumulated additional resistance becomes greater than or equal to a second threshold value, administration of the coagulant into the filtration tank is started.

According to this, the larger the membrane load index, the larger the amount of foulant (soluble organic matters, etc.) contained in the water to be treated. Thus, the permeation ratio resistance at the time when the foulant adheres to the filter membrane surfaces is increased. Therefore, the permeation resistance at the time of permeating the filter membranes is increased, and the load applied to the filter membranes is increased.

Conversely, the smaller the membrane load index, the smaller the amount of foulant contained in the water to be treated. Thus, the permeation ratio resistance at the time when the foulant adheres to the filter membrane surfaces is decreased. Therefore, the permeation resistance at the time of permeating the filter membranes is decreased, and the load applied to the filter membranes is decreased.

In this manner, since the load applied to the filter membranes can be objectively evaluated based on the membrane load index at the time of the filtration step

Additionally, by diffusing air from below the filter membranes in the filtration stopping step, the foulant adhering to the film surfaces of the filter membranes can be removed, and the filter membranes can be washed.

On this occasion, the larger the accumulated additional resistance, the fewer the removal amount of the foulant removed from the filter membranes in the filtration stopping step of the treatment cycle (hereinafter referred to as the previous treatment cycle) immediately before the current treatment cycle, and the lower the washing effect of the filter membranes. Therefore, at the start of the filtration step of the current treatment cycle, the amount of the foulant remaining adhered to the filter membranes is large, and the permeability of the filter membranes is decreased.

Conversely, the smaller the accumulated additional resistance, the larger the removal amount of the foulant removed from the filter membranes in the filtration stopping step of the previous treatment cycle, and the higher the washing effect of the filter membranes. Therefore, at the start of the filtration step of the current treatment cycle, the amount of the foulant remaining adhered to the filter membranes is decreased, and the permeability of the filter membranes is maintained.

Accordingly, based on the accumulated additional resistance, the washing effect of the filter membranes in the filtration stopping step of the previous treatment cycle can be objectively evaluated.

In this manner, since the administration of the coagulant is started by using the membrane load index and the accumulated additional resistance as indexes, the administration of the coagulant can be started at an optimum timing.

According to the method of administering the coagulant of the present invention, it is preferable that, in the filtration step, when the membrane-filtered water amount per membrane area and per time becomes less than a third threshold value, the administration of the coagulant into the filtration tank is stopped.

According to this, the more the membrane-filtered water amount per membrane area and per time, i.e., the flux (filtration flux), decreases, the smaller the load applied to the filter membranes, and the more the aforementioned membrane-filtered water increases, the larger the load applied to the filter membranes becomes.

In this manner, since the administration of the coagulant is stopped by using the membrane-filtered water amount per membrane area and per time as the index, the administration of the coagulant can be stopped at an optimum timing after starting the administration of the coagulant.

A method of administering a coagulant in water treatment of the present invention defines one treatment cycle as including a filtration step for using a filter membrane to filter water to be treated in a treatment tank including a filtration tank having the filter membrane, and a monitoring tank adjacent to the filtration tank, and a filtration stopping step for stopping filtration, and

repeats the treatment cycle to treat the water to be treated, wherein, when an inflow of the water to be treated flowing into the treatment tank from outside exceeds an extraction amount of membrane-filtered water extracted from the filtration tank to the outside of the treatment tank, and thus a water level in the monitoring tank rises and becomes greater than or equal to a fourth threshold value, administration of the coagulant into the filtration tank is started.

According to this, when the inflow of the water to be treated flowing into the treatment tank from the outside exceeds the extraction amount of the membrane-filtered water extracted from the filtration tank to the outside of the treatment tank, and thus the water level of the water to be treated in the monitoring tank rises and becomes greater than or equal to the fourth threshold value, the membrane-filtered water amount (flux) per membrane area and per time is increased, so that the extraction amount of the membrane-filtered water extracted from the filtration tank to the outside of the treatment tank exceeds the inflow of the water to be treated flowing into the treatment tank from the outside. By performing such adjustment of the membrane-filtered water amount, the load applied to the filter membrane is increased.

Accordingly, by starting the administration of the coagulant when the water level of the water to be treated in the monitoring tank becomes greater than or equal to the fourth threshold value as described above, the administration of the coagulant can be started at an optimum timing.

According to the method of administering the coagulant of the present invention, it is preferable that, when the water to be treated overflowing from the filtration tank flows into the monitoring tank, and

the water level in the monitoring tank becomes greater than or equal to the fourth threshold value, the administration of the coagulant into the filtration tank is started.

According to the method of administering the coagulant of the present invention, it is preferable that, in the filtration step, when the water level of the water to be treated in the monitoring tank becomes less than the fifth threshold value lower than the fourth threshold value, the administration of the coagulant into the filtration tank is stopped.

According to this, when the extraction amount of the membrane-filtered water extracted from the filtration tank to the outside of the treatment tank exceeds the inflow of the water to be treated that flows into the treatment tank from the outside, and the water level of the water to be treated in the monitoring tank gradually descends and becomes less than the fifth threshold value, the membrane-filtered water amount (flux) per membrane area and per time is reduced. By performing such adjustment of the membrane-filtered water amount, the load applied to the filter membrane is decreased.

Accordingly, by stopping the administration of the coagulant when the water level of the water to be treated in the monitoring tank becomes less than the fifth threshold value as described above, the administration of the coagulant can be stopped at an optimum timing after starting the administration of the coagulant.

A method of administering a coagulant in water treatment of the present invention defines one treatment cycle as including a filtration step for using a filter membrane to filter water to be treated in a treatment tank including a filtration tank having the filter membrane, and a monitoring tank adjacent to the filtration tank, and a filtration stopping step for stopping filtration, and

repeats the treatment cycle to treat the water to be treated, wherein, in the filtration step, when transmembrane pressure becomes greater than or equal to a sixth threshold value, administration of the coagulant into the filtration tank is started.

According to this, the larger the transmembrane pressure, the larger the load applied to the filter membrane. Therefore, the load applied to the filter membrane can be objectively evaluated based on the transmembrane pressure. Since the administration of the coagulant is started by using this transmembrane pressure as an index, the administration of the coagulant can be started at an optimum timing.

According to the method of administering the coagulant of the present invention, it is preferable to stop the administration of the coagulant when a predetermined time period elapses after starting the administration of the coagulant.

According to the method of administering the coagulant of the present invention, it is preferable that the predetermined time period is a time period obtained by multiplying an actual residence time of the filtration tank in which the filter membrane is immersed by a value obtained by adding 1 to a circulation ratio,

the actual residence time is a time period required for the coagulant administered to a predetermined administration position of the filtration tank to flow from the filtration tank and return to an original administration position of the filtration tank through the monitoring tank,
the circulation ratio is a value obtained by dividing a circulation amount by an inflow of the water to be treated, and
the circulation amount is a flow rate per time of the water to be treated flowing into the monitoring tank from the filtration tank.

According to this, by stopping the administration of the coagulant into the filtration tank after the predetermined time period elapses after starting the administration of the coagulant, the administration of the coagulant can be stopped at an optimum timing after starting the administration of the coagulant.

A method of administering a coagulant in water treatment of the present invention defines one treatment cycle as including a filtration step for using a filter membrane to filter water to be treated in a filtration tank, and a filtration stopping step for stopping filtration, and repeats the treatment cycle to treat the water to be treated, wherein, in the filtration step, when a membrane-filtered water amount per membrane area and per time becomes greater than or equal to a seventh threshold value, administration of the coagulant into the filtration tank is started.

According to this, the more the membrane-filtered water amount per membrane area and per time, i.e., the flux (filtration flux), increases, the larger the load applied to the filter membranes becomes. Therefore, by starting the administration of the coagulant by using this membrane-filtered water amount as an index, the administration of the coagulant can be started at an optimum timing.

According to the method of administering the coagulant of the present invention, it is preferable that, in the filtration step, when the membrane-filtered water amount per membrane area and per time becomes less than an eighth threshold value lower than the seventh threshold value, the administration of the coagulant into the filtration tank is stopped.

According to this, the more the membrane-filtered water amount per membrane area and per time is decreased, the smaller the load applied to the filter membrane becomes. Therefore, by stopping the administration of the coagulant by using this membrane-filtered water amount as the index, after starting the administration of the coagulant, the administration of the coagulant can be stopped at an optimum timing.

A method of administering a coagulant in water treatment of the present invention defines one treatment cycle as including a filtration step for using a filter membrane to filter water to be treated that is supplied to a treatment tank from outside, and a filtration stopping step for stopping filtration, and
repeats the treatment cycle to treat the water to be treated, wherein, when an inflow of the water to be treated flowing into the treatment tank from the outside exceeds an extraction amount of membrane-filtered water that permeates the filter membrane and is extracted to the outside of the treatment tank, and thus a water level in the treatment tank rises and becomes greater than or equal to a ninth threshold value, administration of the coagulant into the treatment tank is started.

According to this, when the inflow of the above-described water to be treated exceeds the extraction amount of the above-described membrane-filtered water, and the water level in the treatment tank becomes greater than or equal to the ninth threshold value, the membrane-filtered water amount (flux) per membrane area and per time is increased, so that the extraction amount of the above-described membrane-filtered water exceeds the inflow of the above-described water to be treated. By performing such adjustment of the membrane-filtered water amount, the load applied to the filter membrane is increased.

Accordingly, by starting the administration of the coagulant when the water level in the treatment tank becomes greater than or equal to the ninth threshold value as described above, the administration of the coagulant can be started at an optimum timing.

According to the method of administering the coagulant of the present invention, it is preferable that, in the filtration step, when the water level of the water to be treated in the treatment tank becomes less than a tenth threshold value lower than the ninth threshold value, the administration of the coagulant into the treatment tank is stopped.

According to this, when the extraction amount of the membrane-filtered water that permeates the filter membrane and is extracted to the outside of the treatment tank exceeds the inflow of the water to be treated flowing into the treatment tank from the outside, and the water level of the water to be treated in the treatment tank gradually descends and becomes less than the tenth threshold value, the membrane-filtered water amount (flux) per membrane area and per time is reduced. By performing such adjustment of the membrane-filtered water amount, the load applied to the filter membrane is decreased.

Accordingly, by stopping the administration of the coagulant when the water level in the treatment tank becomes less than the tenth threshold value as described above, the administration of the coagulant can be stopped at an optimum timing after starting the administration of the coagulant.

## Advantageous Effects of Invention

As described above, according to the present invention, the administration of the coagulant can be started at an optimum timing, and the administration of the coagulant can be stopped at an optimum timing after starting the administration of the coagulant.

## Brief Description of Drawings

[FIG. 1] FIG. 1 is a schematic diagram of a water treatment device in first to fifth embodiments of the present invention.
[FIG. 2] FIG. 2 is a graph showing changes in transmembrane pressure versus time, in a method of administering a coagulant using the water treatment device in the first to fifth embodiments of the present invention.
[FIG. 3] FIG. 3 is a graph showing changes in permeability versus time, in the method of administering the coagulant using the water treatment device in the first to fifth embodiments of the present invention.
[FIG. 4] FIG. 4 is a schematic diagram of a water treatment device in sixth to tenth embodiments of the present invention.
[FIG. 5] FIG. 5 is a schematic diagram of a water treatment device in an eleventh embodiment of the present invention.
[FIG. 6] FIG. 6 is a schematic diagram of a water treatment device in a twelfth embodiment of the present invention.
[FIG. 7] FIG. 7 is a schematic diagram of a conventional water treatment device.

## Description of Embodiments

Hereinafter, embodiments in the present invention will be described with reference to the drawings.

(First Embodiment)

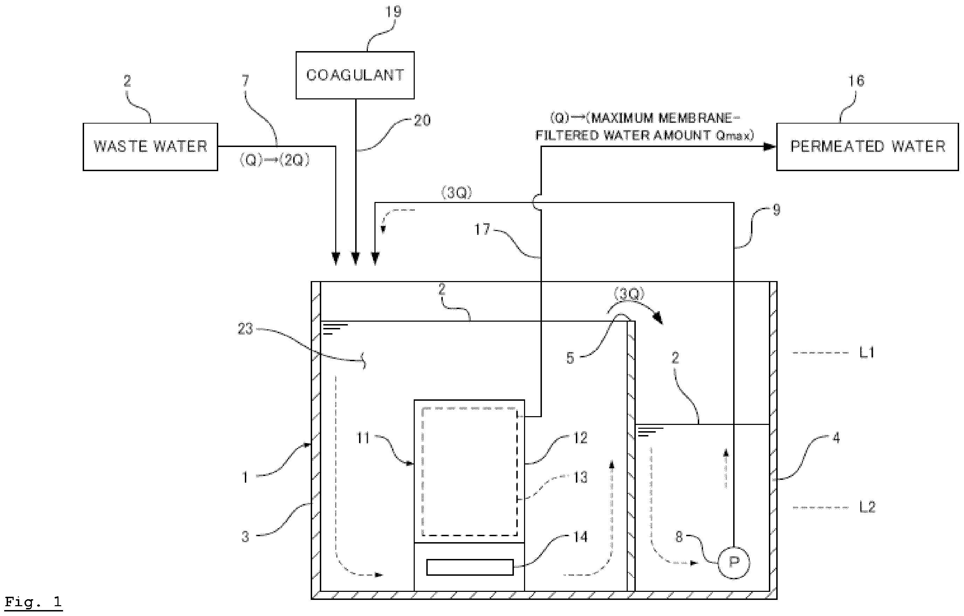

In a first embodiment, as shown in FIG. 1, a treatment tank 1 is a tank that processes waste water 2 (an example of water to be filtered) including an organic matter, etc., and includes a filtration tank 3, and a monitoring tank 4 adjacent to the filtration tank 3. The filtration tank 3 and the monitor tank 4 are divided via an overflow weir 5.

The waste water 2 is supplied from a supply flow path 7 to the filtration tank 3. The waste water 2 supplied to the filtration tank 3 overflows the overflow weir 5, and flows into the adjacent monitoring tank 4. A pump 8 is provided in the monitoring tank 4. A return flow path 9 for returning the waste water 2 in the monitoring tank 4 to the filtration tank 3 is connected to the pump 8.

A submerged membrane separator 11 is installed in the filtration tank 3. The membrane separator 11 includes a plurality of membrane elements 13 provided in a casing 12, and an air diffuser 14 provided below the membrane elements 13.

Each of the membrane elements 13 includes a filter plate, and filter membranes welded on both front and rear surfaces of the filter plate. The waste water 2 that permeates from a upstream side to a downstream side through the filter membranes is sent out to the outside of the filtration tank 1 as permeated water 16 through a permeated water extraction flow path 17. Additionally, a coagulant 19 is administered from a coagulant administration flow path 20 to the waste water 2 in the filtration tank 3.

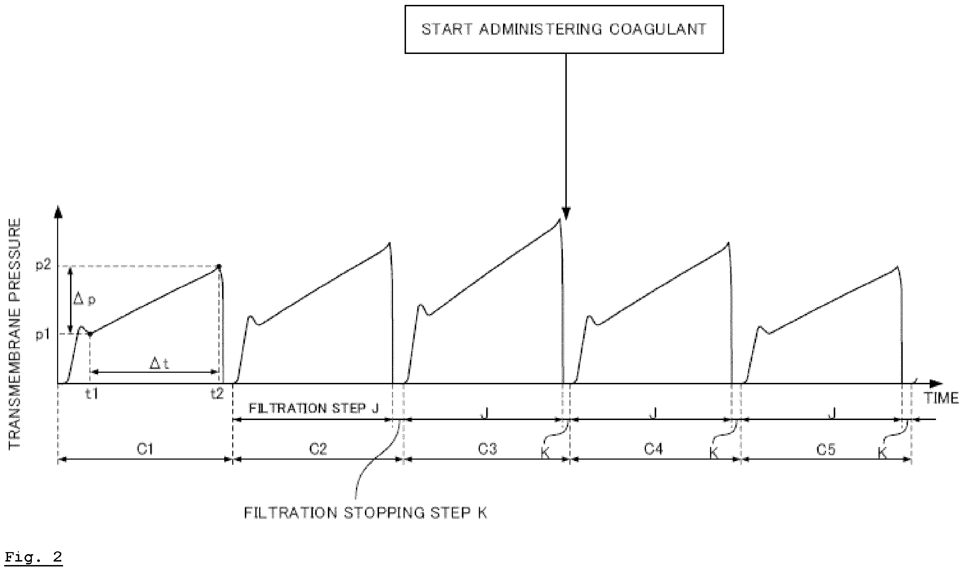

The waste water 2 is processed with the membrane separation activated sludge method by using the treatment tank 1 as described above. On this occasion, as shown in FIG. 2, a filtration step J for using the membrane elements 13 to filter the waste water 2 in the filtration tank 3, and a filtration stopping step K for stopping filtration are defined as one treatment cycle, and the waste water 2 is treated by repeating these treatment cycles C1 to C5.

In the filtration step J, the waste water 2 is supplied from the supply flow path 7 to the filtration tank 3, and the downstream side of the filter membranes of the membrane elements 13 are decompressed while diffusing air from the air diffuser 14 of the membrane separator 11. Accordingly, a part of the waste water 2 in the filtration tank 3 permeates the filter membranes, and is sent out to the outside of the treatment tank 1 from the permeated water extraction flow path 17 as permeated water 16.

Additionally, the waste water 2 in the filtration tank 3 overflows the overflow weir 5, and flows into the adjacent monitoring tank 4. Further, the waste water 2 in the monitoring tank 4 is returned to the filtration tank 3 through the return flow path 9 by driving the pump 8. Additionally, in the filtration stopping step K, the filtration by the membrane elements 13 is stopped while continuing air diffusion from the air diffuser 14.

When treating the waste water 2 by repeating the treatment cycles C1 to C5 as described above, by administering the coagulant 19 from the coagulant administration flow path 20 to the waste water 2 in the filtration tank 3, the coagulant 19 sticks to activated sludge in the waste water 2, and a coarse flock is formed.

Such a method of administering the coagulant 19 will be described below.

FIG. 2 is a graph showing changes in transmembrane pressure of the membrane elements 13 for each treatment cycle, and a vertical axis represents the transmembrane pressure, and a horizontal axis represents time during which treatment cycles C1, C2, C3 ... are performed. Here, the amount of increase of the transmembrane pressure per time in the filtration step J is defined as a membrane load index A. That is, as shown in FIG. 2, a time point at which the amount of the membrane-filtered water per time is stabilized immediately after starting the filtration step J is defined as t1, the transmembrane pressure at this time point t1 is defined as an transmembrane pressure p1 in a beginning period, and the transmembrane pressure at a time point t2 immediately before ending the filtration step J is defined as an transmembrane pressure p2 in an end period. Then, when the difference between the transmembrane pressure p1 in the beginning period and the transmembrane pressure p2 in the end period (that is, p2 - p1) is defined as $\Delta p$, and the time between both the time points t1 and t2 is defined as $\Delta t$, the membrane load index A [Pa/minute] is represented by a relational expression:

$$A = \Delta p / \Delta t$$

The time point t1 at which the amount of the membrane-filtered water per time immediately after starting the filtration step J is stabilized means a time point at which the amount of the membrane-filtered water per time is settled down to a predetermined flux that is set in advance.

Then, when repeating the treatment cycle a plurality of times, for example, as shown in FIG. 2, in the treatment cycle C3, when the membrane load index A obtained as described above becomes greater than or equal to a predetermined membrane load index A1 (an example of a first threshold value), the administration of the coagulant 19 from the coagulant administration flow path 20 into the filtration tank 3 is started.

At the start of the administration of the coagulant 19, only an initial dose D [mg/liter] of the coagulant 19 is administered. The initial dose D is represented by a relational expression:

$$D = E1 \times exp \ (E2 \times F)$$

Here, E1 and E2 are constants. Additionally, F is the amount of the membrane-filtered water per unit membrane area and per unit time of the filter membrane (that is, flux [$m^3/m^2/minute$]).

Thereafter, when the membrane load index A falls less than or equal to a target membrane load index A2, the dose of the coagulant 19 is reduced by a predetermined percentage from the initial dose D. The target membrane load index A2 is set to be a numerical value smaller than the predetermined membrane load index A1.

Thereafter, in the filtration step, when a membrane-filtered water amount F (flux) per unit membrane area and per unit time becomes less than a predetermined membrane-filtered water amount Fs (an example of the third threshold value), the administration of the coagulant 19 from the coagulant administration flow path 20 into the filtration tank 3 is stopped.

According to the method of administering the coagulant 19 as described above, the larger the membrane load index A, the larger the amount of the foulant (soluble organic matters, etc.) contained in the waste water 2. Thus, the permeation ratio resistance at the time when the foulant adheres to the filter membrane surfaces is increased. Therefore, the permeation resistance at the time of permeating the filter membranes of the membrane elements 13 is increased, and the load applied to the filter membranes is increased.

Conversely, the smaller the membrane load index A, the smaller the amount of the foulant contained in the waste water 2. Thus, the permeation ratio resistance at the time when the foulant adheres to the filter membrane surfaces is decreased. Therefore, the permeation resistance at the time of permeating the filter membranes is decreased, and the load applied to the filter membranes is decreased.

In this manner, since the load applied to the filter membranes of the membrane elements 13 can be objectively evaluated based on the membrane load index A at the time of the filtration step J, and the administration of the coagulant 19 is started by using this membrane load index A as an index, the administration of the coagulant 19 can be started at an optimum timing at which the load applied to the filter membranes is increased.

Additionally, the more the membrane-filtered water amount F at the filtration step J decreases, the smaller the load applied to the filter membranes of the membrane elements 13, and the more the membrane-filtered water amount F increases, the larger the load applied to the filter membranes becomes. In this manner, since the administration of the coagulant 19 is stopped by using the membrane-filtered water amount F as the index, the administration of the coagulant 19 can be stopped at an optimum timing at which the load applied to the filter membranes is decreased.

(Second Embodiment)

In a method of administering the coagulant 19 of a second embodiment, the administration of the coagulant 19 is started by using an accumulated additional resistance B as an index, in addition to the membrane load index A illustrated in the above-described first embodiment.

The accumulated additional resistance B is obtained as follows.

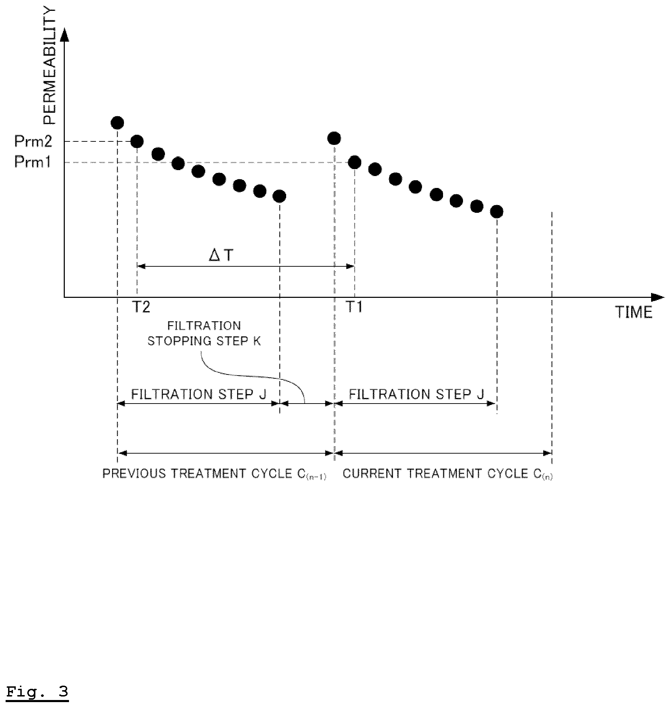

FIG. 3 is a graph illustrating changes in the permeability of filter membranes, and a vertical axis represents the permeability, and a horizontal axis represents time during which treatment cycles are performed. The permeability is indicated by the following relational expressions.

permeability = flux/transmembrane pressure

Here, the time point at which the amount of the membrane-filtered water per time after starting the filtration step J of a currently performed treatment cycle $C_{(n)}$ (hereinafter referred to as the current treatment cycle $C_{(n)}$) is stabilized is defined as a first time point T1, and the permeability at the first time point T1 is defined as first permeability Prm1. Additionally, the time point at which the amount of the membrane-filtered water per time after starting the filtration step J of a treatment cycle $C_{(n-1)}$ (hereinafter referred to as the previous treatment cycle $C_{(n-1)}$) immediately before the current treatment cycle $C_{(n)}$ is stabilized is defined as a second time point T2, and the permeability in the second time point T2 is defined as second permeability Prm2. The inverse number of the above-described first permeability Prm1 is defined as a first filtration resistance value, and the inverse number of the above-described second permeability Prm2 is defined as a second filtration resistance value. That is, when the transmembrane pressure at the first time point T1 is defined as a first transmembrane pressure, the value obtained by dividing the first transmembrane pressure by the flux (the amount of the membrane-filtered water per membrane area and per time) is the first filtration resistance value. Additionally, when the transmembrane pressure at the second time point T2 is defined as a second transmembrane pressure, the value obtained by dividing the second transmembrane pressure by the flux (the amount of the membrane-filtered water per membrane area and per time) is the second filtration resistance value.

When the time from the second time point T2 to the first time point T1 is defined as $\Delta T$, the accumulated additional resistance B is defined as "the value obtained by dividing the difference between the first filtration resistance value and the second filtration resistance value by the time from the second time point T2 to the first time point T1." That is, the accumulated additional resistance B is represented by the following relational expression.

$$
\begin{aligned}
B &= \text{(the first filtration resistance value} - \text{the second filtration resistance values)}/\Delta T \\
&= (1/Prm1 - 1/Prm2)/\Delta T
\end{aligned}
$$

Then, when the membrane load index A becomes greater than or equal to the predetermined membrane load index A1 (an example of the first threshold value), and when the accumulated additional resistance B obtained as described above becomes greater than or equal to the predetermined accumulated additional resistance B1 (an example of a second threshold value), the administration of the coagulant 19 from the coagulant administration flow path 20 into the filtration tank 3 is started.

At the start of the administration of the coagulant 19, only the initial dose D of the coagulant 19 is administered, and thereafter, when the membrane load index A falls less than or equal to the target membrane load index A2, the dose of the coagulant 19 is reduced by a predetermined percentage from the initial dose D.

Thereafter, in the filtration step, when the membrane-filtered water amount F per membrane area and per unit time becomes less than the predetermined membrane-filtered water amount Fs, the administration of the coagulant 19 from the coagulant administration flow path 20 into the filtration tank 3 is stopped.

According to the method of administering the coagulant 19 as described above, the load applied to the filter membranes can be objectively evaluated based on the membrane load index A at the time of the filtration step.

Additionally, the air diffuser 14 diffuses air from below the membrane elements 13 in the filtration stopping step K. Thus, the foulant adhering to the membrane surfaces of the filter membranes can be removed, and the filter membranes can be washed.

On this occasion, the larger the accumulated additional resistance B, the less the removal amount of the foulant removed from the filter membranes in the filtration stopping step K of the previous treatment cycle $C_{(n-1)}$, and the lower the washing effect of the filter membranes. Therefore, at the start of the filtration step J of the current treatment cycle $C_{(n)}$, the amount of the foulant remaining adhered to the filter membranes is large, and the permeability of the filter membranes is decreased.

Conversely, the smaller the accumulated additional resistance B, the larger the removal amount of the foulant removed from the filter membranes in the filtration stopping step K of the previous treatment cycle $C_{(n-1)}$, and the higher

the washing effect of the filter membranes. Therefore, at the start of the filtration step J of the current treatment cycle $C_{(n)}$, the amount of the foulant remaining adhered to the filter membranes is decreased, and the permeability of the filter membranes is improved.

Accordingly, the washing effect of the filter membranes in the filtration stopping step K of the previous treatment cycle $C_{(n-1)}$ can be objectively evaluated based on the accumulated additional resistance B.

In this manner, the administration of the coagulant 19 is started by using the membrane load index A and the accumulated additional resistance B as the indexes. Therefore, the administration of the coagulant 19 can be started at an optimum timing at which the load applied to the filter membranes is increased.

Additionally, the administration of the coagulant 19 is stopped by using the membrane-filtered water amount F as the index. Therefore, after starting the administration of the coagulant 19, the administration of the coagulant 19 can be stopped at an optimum timing at which the load applied to the filter membranes is decreased.

In the above-described second embodiment, the description has been given by using the value obtained by dividing the difference between the first filtration resistance value and the second filtration resistance value by the time from the second time point T2 to the first time point T1 as the accumulated additional resistance B. However, the difference between the first filtration resistance value and the second filtration resistance value may be defined as the accumulated additional resistance B. Alternatively, the value obtained by dividing the difference between the transmembrane pressure at the first time point T1 of the current treatment cycle $C_{(n)}$ and the transmembrane pressure at the second time point T2 of the previous treatment cycle $C_{(n-1)}$ by the time from the second time point T2 to the first time point T1 may be defined as the accumulated additional resistance B. Additionally, the difference between the transmembrane pressure at the above-described first time point T1 and the transmembrane pressure at the above-described second time point T2 may be defined as the accumulated additional resistance B.

(Third Embodiment)

In a method of administering the coagulant 19 of a third embodiment, as shown in FIG. 1, the administration of the coagulant 19 is started and stopped by using the water level of the waste water 2 in the monitoring tank 4 as an index.

In the filtration step, the waste water 2 is filtered by using the membrane elements 13, while circulating the waste water 2 between the filtration tank 3 and the monitoring tank 4.

For example, when the inflow per unit time of the waste water 2 supplied from the supply flow path 7 to the filtration tank 3 is Q [m³/minute], the extraction flow rate per unit time of the permeated water 16 extracted from the permeated water extraction flow path 17 is defined as Q [m³/minute], and the flow rate per time of the waste water 2 returned from the monitoring tank 4 to the filtration tank 3 through the return flow path 9 is defined as 3Q [m³/minute]. As a result, it is assumed that the flow rate per unit time of the waste water 2 that overflows the overflow weir 5 from the filtration tank 3 and flows out to the monitoring tank 4 is adjusted to be 3Q [m³/minute] .

On this occasion, the water level of the waste water 2 in the monitoring tank 4 is maintained between a preset first water level L1 (an example of a fourth threshold value) and a second water level L2 (an example of a fifth threshold value). The second water level L2 is lower than the first water level L1.

Thereafter, when the inflow per unit time of the waste water 2 supplied from the supply flow path 7 to the filtration tank 3 is increased from Q [m³/minute] to, for example, 2Q [m³/minute], the increase in the filtration amount cannot keep up with the increase in the inflow, and the water level of the waste water 2 in the monitoring tank 4 rises.

Therefore, when the water level of the waste water 2 in the monitoring tank 4 becomes greater than or equal to the first water level L1, filtration is performed by increasing the membrane-filtered water amount (flux) per membrane area and per time to the maximum design membrane-filtered water amount Qmax (the maximum flux), so that the extraction amount of the membrane-filtered water extracted from the permeated water extraction flow path 17 exceeds the inflow of the waste water 2 supplied from the supply flow path 7 to the filtration tank 3. By performing such adjustment of the membrane-filtered water amount, the load applied to the filter membranes is increased.

Accordingly, when the water level of the waste water 2 in the monitoring tank 4 becomes greater than or equal to the first water level L1 as described above, by starting the administration of the coagulant 19 from the coagulant administration flow path 20 into the filtration tank 3, the administration of the coagulant 19 can be started at an optimum timing at which the load applied to the filter membranes is increased. In this case, although there is a certain upper limit, the above-described maximum membrane-filtered water amount Qmax is set to, for example, an amount larger than the above-described inflow 2Q.

When the filtration is continued by setting the membrane-filtered water amount to the maximum design membrane-filtered water amount Qmax as described above, and the water level of the waste water 2 in the monitoring tank 4 falls less than the second water level L2, the filtration is performed by reducing the membrane-filtered water amount (flux) per membrane area and per time from the maximum membrane-filtered water amount Qmax to the original extraction flow rate Q. By performing such adjustment of the membrane-filtered water amount, the load applied to the filter membrane is decreased.

Accordingly, when the water level of the waste water 2 in the monitoring tank 4 becomes less than the second water level L2 as described above, by stopping the administration of the coagulant 19 from the coagulant administration flow path 20 into the filtration tank 3, after starting the administration of the coagulant 19, the administration of the coagulant 19 can be stopped at an optimum timing at which the load applied to the filter membranes is decreased.

(Fourth Embodiment)

In a method of administering the coagulant 19 of a fourth embodiment, the administration of the coagulant 19 is started and stopped by using the transmembrane pressure of the filter membranes of the membrane elements 13 and the passage of a predetermined time period as indexes. There is a residence time Ts as an example of the predetermined time period. The residence time Ts is defined by actual residence time × (circulation ratio + 1).

Here, as indicated by dotted line arrows in FIG. 1, the actual residence time is the time required for the coagulant 19 administered to a predetermined administration position 23 of the filtration tank 3 to flow from the filtration tank 3 over the overflow weir 5 into the monitoring tank 4, and to return from the monitoring tank 4 to the original administration position 23 of the filtration tank 3 through the return flow path 9.

Additionally, the circulation ratio is the value obtained by dividing a circulation amount by the inflow of the waste water 2 per time (that is, the circulation amount/the inflow of the waste water 2 per time). The above-described inflow of the waste water 2 is the amount of the waste water 2 flowing into the filtration tank 3 from the supply flow path 7. Additionally, the circulation amount is the flow rate per time of the waste water 2 that flows from the filtration tank 3 over the overflow weir 5 into the monitoring tank 4.

In the filtration step, the waste water 2 is filtered by using the membrane elements 13, while circulating the waste water 2 between the filtration tank 3 and the monitoring tank 4. On this occasion, for example, when the inflow per unit time of the waste water 2 supplied from the supply flow path 7 to the filtration tank 3 is defined as Q $[m^3/minute]$, the flow rate per unit time of the permeated water 16 extracted from the permeated water extraction flow path 17 is defined as Q $[m^3/minute]$, the flow rate per unit time of the waste water 2 that overflows from the filtration tank 3 and flows into the monitoring tank 4 over the overflow weir 5 is defined as 3Q $[m^3/minute]$, the flow rate per time of the waste water 2 flowing into the filtration tank 3 through the return flow path 9 from the monitoring tank 4 is defined as 3Q $[m^3/minute]$, and the actual residence time is defined as 70 [minutes], the circulation amount is 3Q $[m^3/minute]$, and the membrane-filtered water amount per time (that is, the flow rate per unit time of the permeated water 16 extracted from the permeated water extraction flow path 17) is Q $[m^3/minute]$. Accordingly, the circulation ratio is 3Q/Q = 3. The residence time Ts is 70 × (3 + 1) = 280 [minutes].

In the filtration step, when the transmembrane pressure of the filter membranes of the membrane elements 13 becomes greater than or equal to a predetermined transmembrane pressure (an example of a sixth threshold value), the administration of the coagulant 19 from the coagulant administration flow path 20 into the filtration tank 3 is started.

According to this, the larger the transmembrane pressure, the larger the load applied to the filter membranes. Therefore, the load applied to the filter membranes can be objectively evaluated based on the transmembrane pressure. Since the administration of the coagulant 19 is started by using this transmembrane pressure as an index, the administration of the coagulant 19 can be started at an optimum timing at which the load applied to the filter membranes is increased.

When the residence time Ts (an example of the predetermined time period) elapses after starting the administration of the coagulant 19 in this manner, the administration of the coagulant 19 into the filtration tank 3 is stopped. Accordingly, after starting the administration of the coagulant 19, the administration of the coagulant 19 can be stopped at an optimum timing at which the load applied to the filter membranes is decreased.

(Fifth Embodiment)

In a method of administering the coagulant 19 of a fifth embodiment, the administration of the coagulant 19 is started and stopped by using the membrane-filtered water amount per membrane area and per time (that is, the flux $[m^3/m^2/minute]$) of the filter membranes of the membrane elements 13 as an index.

That is, in the filtration step, when the above-described membrane-filtered water amount becomes greater than or equal to the preset first membrane-filtered water amount (an example of a seventh threshold value), the administration of the coagulant 19 from the coagulant administration flow path 20 into the filtration tank 3 is started.

According to this, the more the membrane-filtered water amount is increased, the larger the load applied to the filter membranes becomes. Therefore, by starting the administration of the coagulant 19 by using this membrane-filtered water amount as the index, the administration of the coagulant 19 can be started at an optimum timing at which the load applied to the filter membranes is increased.

Thereafter, in the filtration step, when the membrane-filtered water amount becomes less than the preset second membrane-filtered water amount (an example of an eighth threshold value), the administration of the coagulant 19 from the coagulant administration flow path 20 into the filtration tank 3 is stopped. The second membrane-filtered water amount is set to be a water amount smaller than the first membrane-filtered water amount.

According to this, the more the membrane-filtered water amount is decreased, the smaller the load applied to the filter membranes becomes. Therefore, by stopping the administration of the coagulant 19 by using this membrane-filtered water amount as the index, after starting the administration of the coagulant 19, the administration of the coagulant 19 can be stopped at an optimum timing at which the load applied to the filter membrane is decreased.

(Sixth Embodiment)

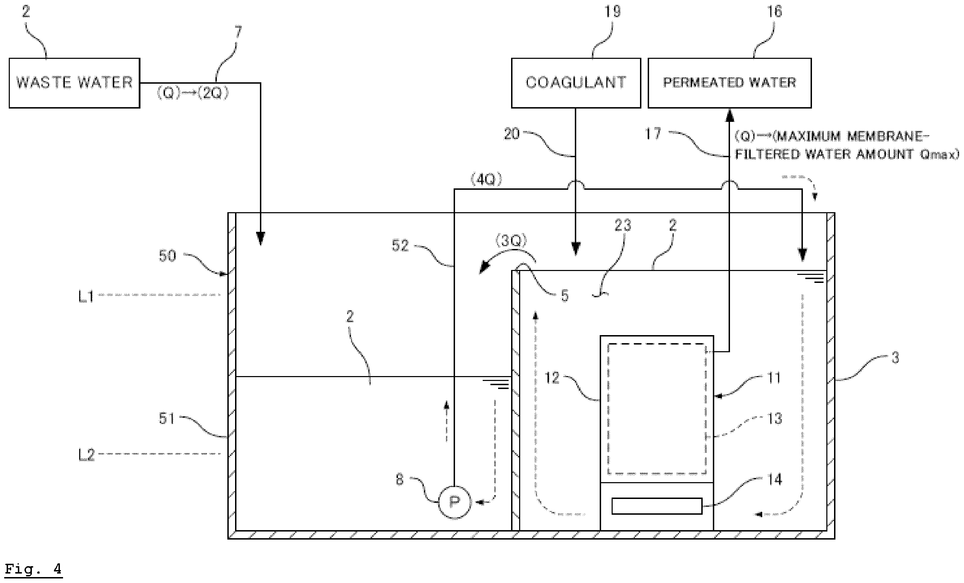

A water treatment device of sixth embodiment will be described based on FIG. 4. Note that members that are the same as the members in the aforementioned first to fifth embodiments will be denoted by the same signs, and a detailed description will be omitted.

A treatment tank 50 includes the filtration tank 3, and an anoxia tank 51 (an example of the monitoring tank) adjacent to the filtration tank 3. The filtration tank 3 is an aerobic tank. The filtration tank 3 and the anoxia tank 51 are divided via the overflow weir 5. The pump 8 is provided in the anoxia tank 51. A delivery flow path 52 for sending the waste water 2 in the anoxia tank 51 into the filtration tank 3 is connected to the pump 8.

The waste water 2 is supplied from the supply flow path 7 to the anoxia tank 51, and sent from the anoxia tank 51 into the filtration tank 3 through the delivery flow path 52 by the pump 8. Thereafter, a part of the waste water 2 overflows from the inside of the filtration tank 3 over the overflow weir 5 to be returned to the anoxia tank 51.

The submerged membrane separator 11 is installed in the filtration tank 3.

The waste water 2 is treated with the membrane separation activated sludge method by using the treatment tank 50 as described above. On this occasion, the waste water 2 is treated by defining the filtration step and the filtration stopping step as one treatment cycle, and repeating this treatment cycle.

In the filtration step, the waste water 2 is supplied from the supply flow path 7 to the anoxia tank 51, the waste water 2 in the anoxia tank 51 is sent from the delivery flow path 52 into the filtration tank 3 by driving the pump 8, and the downstream side of the filter membranes of the membrane elements 13 is decompressed, while diffusing air from the air diffuser 14 of the membrane separator 11. Accordingly, a part of the waste water 2 in the filtration tank 3 permeates the filter membranes, and is sent out to the outside of the treatment tank 1 from the permeated water extraction flow path 17 as the permeated water 16.

Additionally, the waste water 2 in the filtration tank 3 overflows the overflow weir 5 to be returned to the adjacent anoxia tank 51. Accordingly, the waste water 2 circulates between the filtration tank 3 and the anoxia tank 51, ammonia nitrogen in the waste water 2 is nitrified in the filtration tank 3 to become nitric acid, and the nitric acid is denitrified in the anoxia tank 51 to become nitrogen gas.

Additionally, in the filtration stopping step, the filtration by the membrane elements 13 is stopped, while continuing air diffusion from the air diffuser 14.

When treating the waste water 2 by repeating the treatment cycles as described above, by administering the coagulant 19 from the coagulant administration flow path 20 into the waste water 2 in the filtration tank 3, the coagulant 19 sticks to the activated sludge in the waste water 2, and a coarse flock is formed.

As such a method of administering the coagulant 19, similar to the aforementioned first embodiment, when the membrane load index A becomes greater than or equal to the predetermined membrane load index A1 (an example of the first threshold value), the administration of the coagulant 19 from the coagulant administration flow path 20 into the filtration tank 3 is started. At the start of the administration of the coagulant 19, only the initial dose D of the coagulant 19 is administered.

Thereafter, when the membrane load index A falls less than or equal to the target membrane load index A2, the dose of the coagulant 19 is reduced by a predetermined percentage from the initial dose D. The target membrane load index A2 is set to be a numerical value smaller than the predetermined membrane load index A1.

Thereafter, in the filtration step, when the membrane-filtered water amount F (flux) per unit membrane area and per unit time becomes less than the predetermined membrane-filtered water amount Fs (an example of the third threshold value), the administration of the coagulant 19 from the coagulant administration flow path 20 into the filtration tank 3 is stopped.

According to the method of administering the coagulant 19 as described above, the load applied to the filter membranes of the membrane elements 13 can be objectively evaluated based on the membrane load index A at the time of the filtration step, and the administration of the coagulant 19 is started by using this membrane load index A as the index. Therefore, the administration of the coagulant 19 can be started at an optimum timing.

Additionally, the administration of the coagulant 19 is stopped by using the membrane-filtered water amount F as the index. Therefore, the administration of the coagulant 19 can be stopped at an optimum timing after starting the administration of the coagulant 19.

(Seventh Embodiment)

In a seventh embodiment, as the method of administering the coagulant 19, in the water treatment device shown in FIG. 4, similar to the aforementioned second embodiment, the administration of the coagulant 19 is started by using the membrane load index A and the accumulated additional resistance B as the indexes.

That is, when the membrane load index A becomes greater than or equal to the predetermined membrane load index A1 (an example of the first threshold value), and the accumulated additional resistance B becomes greater than or equal to the predetermined accumulated additional resistance B1 (an example of the second threshold value), the administration of the coagulant 19 from the coagulant administration flow path 20 into the filtration tank 3 is started.

At the start of the administration of the coagulant 19, only the initial dose D of the coagulant 19 is administered, and thereafter, when the membrane load index A falls less than the target membrane load index A2, the dose of the coagulant 19 is reduced by a predetermined percentage from the initial dose D.

Thereafter, in the filtration step, when the membrane-filtered water amount F per membrane area and per unit time becomes less than the predetermined membrane-filtered water amount Fs, the administration of the coagulant 19 from the coagulant administration flow path 20 into the filtration tank 3 is stopped.

According to the method of administering the coagulant 19 as described above, the load applied to the filter membranes can be objectively evaluated based on the membrane load index A at the time of the filtration step, and the washing effect of the filter membranes in the filtration stopping step of the previous treatment cycle can be objectively evaluated based on the accumulated additional resistance B.

In this manner, since the administration of the coagulant 19 is started by using the membrane load index A and the accumulated additional resistance B as the indexes, the administration of the coagulant 19 can be started at an optimum timing.

Additionally, the administration of the coagulant 19 is stopped by using the membrane-filtered water amount F as the index. Therefore, after starting the administration of the coagulant 19, the administration of the coagulant 19 can be stopped at an optimum timing.

(Eighth Embodiment)

In an eighth embodiment, as the method of administering the coagulant 19, in the water treatment device shown in FIG. 4, similar to the aforementioned third embodiment, the administration of the coagulant 19 is started and stopped by using the water level of the waste water 2 in the anoxia tank 51 (monitoring tank) as the index.

In the filtration step, the waste water 2 is filtered by using the membrane elements 13, while circulating the waste water 2 between the filtration tank 3 and the anoxia tank 51.

For example, it is assumed that, when the inflow per unit time of the waste water 2 supplied from the supply flow path 7 to the anoxia tank 51 is Q [m³/minute], the flow rate per unit time of the waste water 2 sent from the anoxia tank 51 to the filtration tank 3 through the delivery flow path 52 is defined as 4Q [m³/minute], the extraction flow rate per unit time of the permeated water 16 extracted from the permeated water extraction flow path 17 is defined as Q [m³/minute], and the flow rate per unit time of the waste water 2 that overflows the overflow weir 5 from the filtration tank 3 to be returned to the anoxia tank 51 is adjusted to be $3_Q$ [m³/minute].

On this occasion, the water level of the waste water 2 in the anoxia tank 51 is maintained between the preset first water level L1 (an example of the fourth threshold value) and the second water level L2 (an example of the fifth threshold value). The second water level L2 is lower than the first water level L1.

Thereafter, when the inflow per unit time of the waste water 2 supplied from the supply flow path 7 to the anoxia tank 51 is increased from Q [m³/minute] to, for example, 2Q [m³/minute], the increase in the filtration amount cannot keep up with the increase in the inflow, and the water level of the waste water 2 in the anoxia tank 51 rises.

Therefore, when the water level of the waste water 2 in the anoxia tank 51 becomes greater than or equal to the first water level L1, filtration is performed by increasing the membrane-filtered water amount (flux) per membrane area and per time to the maximum design membrane-filtered water amount Qmax (the maximum flux), so that the extraction amount of the membrane-filtered water extracted from the permeated water extraction flow path 17 exceeds the inflow of the waste water 2 supplied from the supply flow path 7 to the anoxia tank 51. By performing such adjustment of the membrane-filtered water amount, the load applied to the filter membrane is increased.

Accordingly, when the water level of the waste water 2 in the anoxia tank 51 becomes greater than or equal to the first water level L1 as described above, by starting the administration of the coagulant 19 from the coagulant administration flow path 20 into the filtration tank 3, the administration of the coagulant 19 can be started at an optimum timing at which the load applied to the filter membranes is increased. In this case, although there is a certain upper limit, the above-described maximum membrane-filtered water amount Qmax is set to, for example, an amount larger than the above-described inflow 2Q.

When the filtration is continued by setting the membrane-filtered water amount to the maximum design membrane-filtered water amount Qmax as described above, and the water level of the waste water 2 in the anoxia tank 51 falls less than the second water level L2, the filtration is performed by reducing the membrane-filtered water amount (flux) per membrane area and per time from the maximum membrane-filtered water amount Qmax to the original extraction flow rate Q. By performing such adjustment of the membrane-filtered water amount, the load applied to the filter membrane is decreased.

Accordingly, when the water level of the waste water 2 in the anoxia tank 51 becomes less than the second water level L2 as described above, by stopping the administration of the coagulant 19 from the coagulant administration flow path 20 into the filtration tank 3, after starting the administration of the coagulant 19, the administration of the coagulant 19 can be stopped at an optimum timing at which the load applied to the filter membranes is decreased.

(Ninth Embodiment)

In a ninth embodiment, as the method of administering the coagulant 19, in the water treatment device shown in FIG. 4, similar to the aforementioned fourth embodiment, the administration of the coagulant 19 is started and stopped by using the transmembrane pressure of the filter membranes of the membrane elements 13 and the passage of a predetermined time period as the indexes. There is the residence time Ts as an example of the predetermined time period. The residence time Ts is defined by the actual residence time x (the circulation ratio + 1).

Here, as indicated by dotted line arrows in FIG. 4, the actual residence time is the time required for the coagulant 19 administered to the predetermined administration position 23 of the filtration tank 3 to circulate in the filtration tank 3, to flow from the filtration tank 3 over the overflow weir 5 into the anoxia tank 51, and to return from the anoxia tank 51 to the original administration position 23 of the filtration tank 3 through the delivery flow path 52.

Additionally, the circulation ratio is the circulation amount/the inflow of the waste water 2 per time. The above-described inflow of the waste water 2 is the amount of the waste water 2 flowing into the anoxia tank 51 from the supply flow path 7. Additionally, the circulation amount is the flow rate per time of the waste water 2 flowing from the filtration tank 3 over the overflow weir 5 into the anoxia tank 51.

In the filtration step, the waste water 2 is filtered by using the membrane elements 13, while circulating the waste water 2 between the filtration tank 3 and the anoxia tank 51. On this occasion, for example, when the inflow per unit time of the waste water 2 supplied from the supply flow path 7 to the anoxia tank 51 is defined as Q [$m^3$/minute], the flow rate per unit time of the permeated water 16 extracted from the permeated water extraction flow path 17 is defined as Q [$m^3$/minute], the flow rate per time of the waste water 2 sent from the anoxia tank 51 to the filtration tank 3 through the delivery flow path 52 is defined as 4Q [$m^3$/minute], the flow rate per unit time of the waste water 2 that overflows the overflow weir 5 from the filtration tank 3 to be returned to the anoxia tank 51 is defined as 3Q [$m^3$/minute], and the actual residence time is defined as 70 [minutes], the circulation amount is 3Q [$m^3$/minute], and the membrane-filtered water amount per time (that is, the flow rate per unit time of the permeated water 16 extracted from the permeated water extraction flow path 17) is Q [$m^3$/minute]. Accordingly, the circulation ratio is 3Q/Q = 3, and the residence time Ts is $70 \times (3 + 1) = 280$ [minutes].

In the filtration step, when the transmembrane pressure of the filter membranes of the membrane elements 13 becomes greater than or equal to the predetermined transmembrane pressure (an example of the sixth threshold value), the administration of the coagulant 19 from the coagulant administration flow path 20 into the filtration tank 3 is started.

According to this, the larger the transmembrane pressure, the larger the load applied to the filter membranes. Therefore, the load applied to the filter membranes can be objectively evaluated based on the transmembrane pressure, and since the administration of the coagulant 19 is started by using this transmembrane pressure as an index, the administration of the coagulant 19 can be started at an optimum timing at which the load applied to the filter membranes is increased.

When the residence time Ts (an example of the predetermined time period) elapses after starting the administration of the coagulant 19 in this manner, the administration of the coagulant 19 into the filtration tank 3 is stopped. Accordingly, after starting the administration of the coagulant 19, the administration of the coagulant 19 can be stopped at an optimum timing at which the load applied to the filter membranes is decreased.

(Tenth Embodiment)

In a tenth embodiment, as the method of administering the coagulant 19, in the water treatment device shown in FIG. 4, similar to the aforementioned fifth embodiment, the administration of the coagulant 19 is started and stopped by using the membrane-filtered water amount per membrane area and per time (that is, the flux [$m^3/m^2$/minute]) of the filter membranes of the membrane elements 13 as the index.

That is, in the filtration step, when the above-described membrane-filtered water amount becomes greater than or equal to the preset first membrane-filtered water amount (an example of the seventh threshold value), the administration of the coagulant 19 from the coagulant administration flow path 20 into the filtration tank 3 is started.

According to this, the more the membrane-filtered water amount is increased, the larger the load applied to the filter membranes becomes. Therefore, by starting the administration of the coagulant 19 by using this membrane-filtered water amount as the index, the administration of the coagulant 19 can be started at an optimum timing at which the load applied to the filter membranes is increased.

Thereafter, in the filtration step, when the membrane-filtered water amount becomes less than the preset second membrane-filtered water amount (an example of the eighth threshold value), the administration of the coagulant 19 from the coagulant administration flow path 20 into the filtration tank 3 is stopped. Note that the second membrane-filtered water amount is set to be a water amount smaller than the first membrane-filtered water amount.

According to this, the more the membrane-filtered water amount is decreased, the smaller the load applied to the filter membranes becomes. Therefore, by stopping the administration of the coagulant 19 by using this membrane-filtered water amount as the index, after starting the administration of the coagulant 19, the administration of the coagulant 19 can be stopped at an optimum timing at which the load applied to the filter membrane is decreased.

(Eleventh Embodiment)

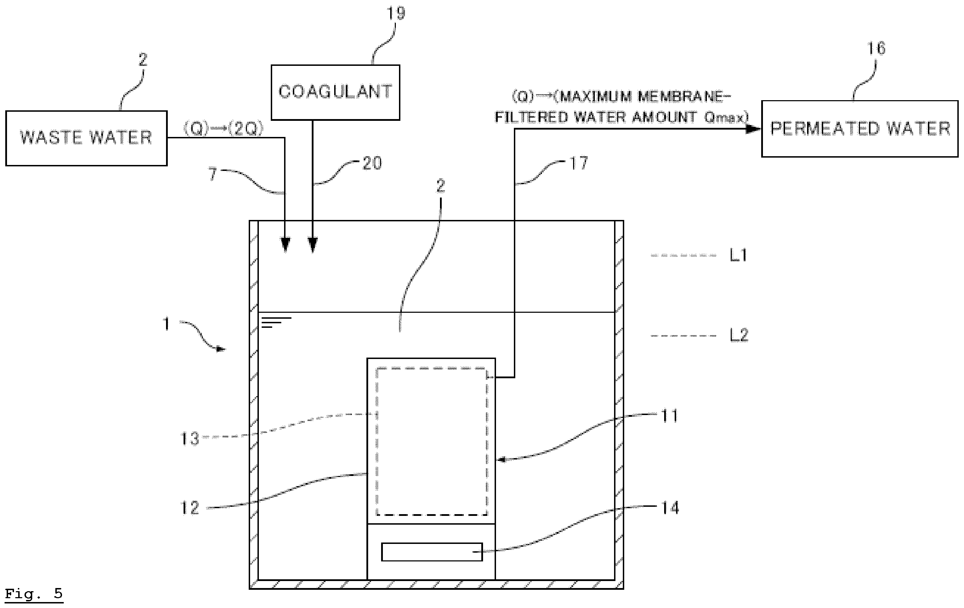

An eleventh embodiment will be described based on FIG. 5. Note that members that are the same as the members in the aforementioned first to tenth embodiments will be denoted by the same signs, and a detailed description will be omitted.

In the eleventh embodiment, as shown in FIG. 5, the treatment tank 1 does not include the monitoring tank 4 of the aforementioned first to fifth embodiments, and the anoxia tank 51 of the sixth to tenth embodiments, and the submerged membrane separator 11 is installed in the treatment tank 1. The waste water 2 is supplied from the supply flow path 7 to the treatment tank 1. Additionally, the coagulant 19 is administered from the coagulant administration flow path 20 to the waste water 2 in the treatment tank 1.

The waste water 2 is treated with the membrane separation activated sludge method by using the treatment tank 1 as described above. On this occasion, the waste water 2 is treated by defining the filtration step for filtering the waste water 2 in the treatment tank 1 by using the membrane elements 13, and the filtration stopping step for stopping the filtration as one treatment cycle, and repeating this treatment cycle.

In the filtration step, the waste water 2 is supplied from the supply flow path 7 to the treatment tank 1, and the downstream side of the filter membranes of the membrane elements 13 is decompressed, while diffusing air from the air diffuser 14 of the membrane separator 11. In this manner, a part of the waste water 2 in the treatment tank 1 permeates the filter membranes, and sent out to the outside of the treatment tank 1 from the permeated water extraction flow path 17 as the permeated water 16.

Additionally, in the filtration stopping step, the filtration by the membrane elements 13 is stopped while continuing air diffusion from the air diffuser 14.

When treating the waste water 2 by repeating the treatment cycles as described above, by administering the coagulant 19 from the coagulant administration flow path 20 into the waste water 2 in the treatment tank 1, the coagulant 19 sticks to the activated sludge in the waste water 2, and a coarse flock is formed. Such a method of administering the coagulant 19 will be described below.

For example, it is assumed that, when the inflow per unit time of the waste water 2 supplied from the supply flow path 7 to the treatment tank 1 is Q [m³/minute], the extraction flow rate per unit time of the permeated water 16 that permeates the membrane elements 13 and is extracted from the permeated water extraction flow path 17 to the outside of the treatment tank 1 is adjusted to be Q [m³/minute].

On this occasion, the water level of the waste water 2 in the treatment tank 1 is maintained between the preset first water level L1 (an example of a ninth threshold value) and the second water level L2 (an example of a tenth threshold value). The second water level L2 is lower than the first water level L1.

Thereafter, when the inflow per unit time of the waste water 2 supplied from the supply flow path 7 to the treatment tank 1 is increased from Q [m³/minute] to, for example, 2Q [m³/minute], the increase in the filtration amount cannot keep up with the increase in the inflow, the inflow of the waste water 2 flowing into the treatment tank 1 exceeds the extraction amount of the permeated water 16 extracted from the permeated water extraction flow path 17 to the outside of the treatment tank 1, and the water level of the waste water 2 in the treatment tank 1 rises.

Therefore, when the water level of the waste water 2 in the treatment tank 1 becomes greater than or equal to the first water level L1, the filtration is performed by increasing the membrane-filtered water amount (flux) per membrane area and per time to the maximum design membrane-filtered water amount Qmax (the maximum flux), and the administration of the coagulant 19 from the coagulant administration flow path 20 into the treatment tank 1 is started. In this manner, by starting the administration of the coagulant 19 by using the water level of the waste water 2 in the treatment tank 1 as the index, the administration of the coagulant 19 can be started at an optimum timing at which the load applied to the filter membranes is increased. In this case, although there is a certain upper limit, the above-described maximum membrane-filtered water amount Qmax is set to, for example, an amount larger than the above-described inflow 2Q.

By continuing the filtration by setting the membrane-filtered water amount to the maximum design membrane-filtered water amount Qmax as described above, the extraction amount of the permeated water 16 extracted from the permeated water extraction flow path 17 to the outside of the treatment tank 1 exceeds the inflow of the waste water 2 flowing into the treatment tank 1, and the water level of the waste water 2 in the treatment tank 1 gradually falls. Then, when the water level of the waste water 2 in the treatment tank 1 becomes less than the second water level L2, the administration of the coagulant 19 from the coagulant administration flow path 20 into the treatment tank 1 is stopped, and the membrane-filtered water amount is returned to the original extraction flow rate Q from the maximum membrane-filtered water amount Qmax.

In this manner, by stopping the administration of the coagulant 19 by using the water level of the waste water 2 in the treatment tank 1 as the index, after starting the administration of the coagulant 19, the administration of the coagulant 19 can be stopped at an optimum timing at which the load applied to the filter membranes is decreased.

(Twelfth Embodiment)

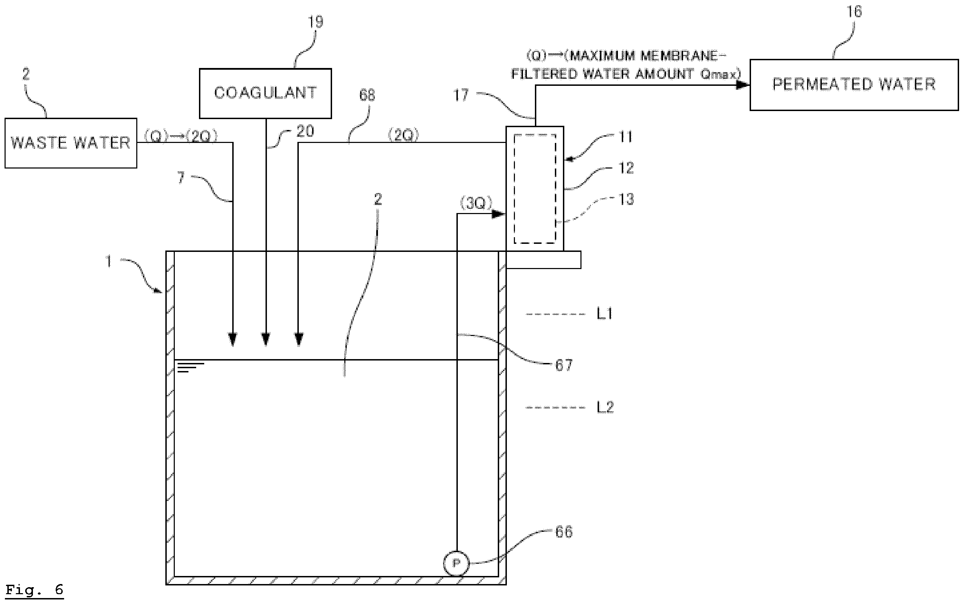

A twelfth embodiment is a modification of the aforementioned eleventh embodiment, and as shown in FIG. 6, the membrane separator 11 is installed to the outside of the treatment tank 1. The membrane separator 11 includes a plurality of membrane elements 13 provided in the casing 12. Each of the membrane elements 13 includes filter membranes, such as hollow fiber membranes.

A pump 66 for supplying the waste water 2 to an inlet of the membrane separator 11 is installed at a bottom of the treatment tank 1, and an inlet-side flow path 67 is connected between the pump 66 and the inlet of the membrane separator 11.

Additionally, an outlet-side flow path 68 for returning the waste water 2 condensed within the membrane separator 11 into the treatment tank 1 is connected to an outlet of the membrane separator 11.

The waste water 2 is treated with the membrane separation activated sludge method by using the treatment tank 1 as described above. On this occasion, the waste water 2 is treated by defining the filtration step for filtering the waste water 2 in the treatment tank 1 by using the membrane elements 13, and the filtration stopping step for stopping the filtration as one treatment cycle, and repeating this treatment cycle.

In the filtration step, the waste water 2 is supplied from the supply flow path 7 to the treatment tank 1, the waste water 2 in the treatment tank 1 is supplied from the inlet-side flow path 67 to the inlet of the membrane separator 11 by driving the pump 66, and the downstream side of the filter membranes of the membrane elements 13 is decompressed. Accordingly, a part of the waste water 2 permeates the filter membranes, and is sent out to the outside of the treatment tank 1 from the permeated water extraction flow path 17 as permeated water 16. On this occasion, the waste water 2 that has not permeated the filter membranes is condensed, and is returned into the treatment tank 1 from the outlet-side flow path 68.

Additionally, the filtration by the membrane elements 13 is stopped in the filtration stopping step.

When treating the waste water 2 by repeating the treatment cycle as described above, by administering the coagulant 19 from the coagulant administration flow path 20 to the waste water 2 in the treatment tank 1, the coagulant 19 sticks to activated sludge in the waste water 2, and a coarse flock is formed.

Such a method of administering the coagulant 19 will be described below.

For example, it is assumed that, when the inflow per unit time of the waste water 2 supplied from the supply flow path 7 to the treatment tank 1 is Q [m$^3$/minute], the extraction flow rate per unit time of the permeated water 16 extracted from the permeated water extraction flow path 17 is defined as Q [m$^3$/minute], the flow rate per time of the waste water 2 supplied to the inlet of the membrane separator 11 through the inlet-side flow path 67 from the inside of the treatment tank 1 is defined as 3Q [m$^3$/minute], and the flow rate per unit time of the waste water 2 returned into the treatment tank 1 through the outlet-side flow path 68 from the outlet of the membrane separator 11 is adjusted to be 2Q [m$^3$/minute].

On this occasion, the water level of the waste water 2 in the treatment tank 1 is maintained between the preset first water level L1 (an example of the ninth threshold value) and the second water level L2 (an example of the tenth threshold value). The second water level L2 is lower than the first water level L1.

Thereafter, when the inflow per unit time of the waste water 2 supplied from the supply flow path 7 to the treatment tank 1 is increased from Q [m$^3$/minute] to, for example, 2Q [m$^3$/minute], the increase in the filtration amount cannot keep up with the increase in the inflow, the inflow of the waste water 2 flowing into the treatment tank 1 exceeds the extraction amount of the permeated water 16 extracted from the permeated water extraction flow path 17 to the outside of the treatment tank 1, and the water level of the waste water 2 in the treatment tank 1 rises.

Therefore, when the water level of the waste water 2 in the treatment tank 1 becomes greater than or equal to the first water level L1, the filtration is performed by increasing the membrane-filtered water amount (flux) per membrane area and per time to the maximum design membrane-filtered water amount Qmax (the maximum flux), and the administration of the coagulant 19 from the coagulant administration flow path 20 into the treatment tank 1 is started. In this manner, by starting the administration of the coagulant 19 by using the water level of the waste water 2 in the treatment tank 1 as the index, the administration of the coagulant 19 can be started at an optimum timing at which the load applied to the filter membranes is increased. In this case, although there is a certain upper limit, the above-described maximum membrane-filtered water amount Qmax is set to, for example, an amount larger than the above-described inflow 2Q.

By continuing the filtration by setting the membrane-filtered water amount to the maximum design membrane-filtered water amount Qmax as described above, the extraction amount of the permeated water 16 extracted from the permeated water extraction flow path 17 to the outside of the treatment tank 1 exceeds the inflow of the waste water 2 flowing into the treatment tank 1, and the water level of the waste water 2 in the treatment tank 1 gradually falls. Then, when the water level of the waste water 2 in the treatment tank 1 becomes less than the second water level L2, the administration of the coagulant 19 from the coagulant administration flow path 20 into the treatment tank 1 is stopped, and the membrane-filtered water amount is returned to the original extraction flow rate Q from the maximum membrane-filtered water amount Qmax.

In this manner, by stopping the administration of the coagulant 19 by using the water level of the waste water 2 in the treatment tank 1 as the index, after starting the administration of the coagulant 19, the administration of the coagulant 19 can be stopped at an optimum timing at which the load applied to the filter membranes is decreased.

In each of the above-described embodiments, although the waste water 2 is listed as an example of the water to be treated, the water to be treated may be water including organic matters other than the waste-water 2, etc.

**Claims**

1.   A method of administering a coagulant in water treatment, the method defining one treatment cycle as comprising a filtration step for using a filter membrane to filter water to be treated in a filtration tank, and a filtration stopping step for stopping filtration, and repeating the treatment cycle to treat the water to be treated,

   wherein a membrane load index is defined as an amount of increase in transmembrane pressure per time in the filtration step, and
   administration of the coagulant into the filtration tank is started when the membrane load index becomes greater than or equal to a first threshold value.

2.   A method of administering a coagulant in water treatment, the method defining one treatment cycle as comprising a filtration step for using a filter membrane to filter water to be treated in a filtration tank, and a filtration stopping step for stopping filtration, and repeating the treatment cycle to treat the water to be treated,

   wherein a membrane load index is defined as an amount of increase in transmembrane pressure per time in the filtration step,
   a time point at which a membrane-filtered water amount per time after starting the filtration step of a current treatment cycle is stabilized is defined as a first time point,
   the transmembrane pressure at the first time point is defined as a first transmembrane pressure,
   a time point at which the membrane-filtered water amount per time after starting the filtration step of a treatment cycle immediately before the current treatment cycle is stabilized is defined as a second time point,
   the transmembrane pressure at the second time point is defined as a second transmembrane pressure,
   a difference between the first transmembrane pressure and the second transmembrane pressure is defined as an accumulated additional resistance, and
   when the membrane load index becomes greater than or equal to a first threshold value, and the accumulated additional resistance becomes greater than or equal to a second threshold value, administration of the coagulant into the filtration tank is started.

3.   A method of administering a coagulant in water treatment, the method defining one treatment cycle as comprising a filtration step for using a filter membrane to filter water to be treated in a filtration tank, and a filtration stopping step for stopping filtration, and repeating the treatment cycle to treat the water to be treated,

   wherein a membrane load index is defined as an amount of increase in transmembrane pressure per time in the filtration step,
   a time point at which a membrane-filtered water amount per time after starting the filtration step of a current treatment cycle is stabilized is defined as a first time point,
   the transmembrane pressure at the first time point is defined as a first transmembrane pressure,
   a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
a value obtained by dividing a difference between the first transmembrane pressure and the second transmembrane pressure by a time period from the second time point to the first time point is defined as an accumulated additional resistance, and when the membrane load index becomes greater than or equal to a first threshold value, and the accumulated additional resistance becomes greater than or equal to a second threshold value, administration of the coagulant into the filtration tank is started.

4. A method of administering a coagulant in water treatment, the method defining one treatment cycle as comprising a filtration step for using a filter membrane to filter water to be treated in a filtration tank, and a filtration stopping step for stopping filtration, and repeating the treatment cycle to treat the water to be treated,

wherein a membrane load index is defined as an amount of increase in transmembrane pressure per time in the filtration step,
a time point at which a membrane-filtered water amount per time after starting the filtration step of a current treatment cycle is stabilized is defined as a first time point,
the transmembrane pressure at the first time point is defined as a first transmembrane pressure,
a value obtained by dividing the first transmembrane pressure by a membrane-filtered water amount per membrane area and per time is defined as a first filtration resistance value,
a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
a value obtained by dividing the second transmembrane pressure by the membrane-filtered water amount per membrane area and per time is defined as a second filtration resistance value,
a difference between the first filtration resistance value and the second filtration resistance value is defined as an accumulated additional resistance, and
when the membrane load index becomes greater than or equal to a first threshold value, and the accumulated additional resistance becomes greater than or equal to a second threshold value, administration of the coagulant into the filtration tank is started.

5. A method of administering a coagulant in water treatment, the method defining one treatment cycle as comprising a filtration step for using a filter membrane to filter water to be treated in a filtration tank, and a filtration stopping step for stopping filtration, and repeating the treatment cycle to treat the water to be treated,

wherein a membrane load index is defined as an amount of increase in transmembrane pressure per time in the filtration step,
a time point at which a membrane-filtered water amount per time after starting the filtration step of a current treatment cycle is stabilized is defined as a first time point,
the transmembrane pressure at the first time point is defined as a first transmembrane pressure,
a value obtained by dividing the first transmembrane pressure by a membrane-filtered water amount per membrane area and per time is defined as a first filtration resistance value,
a time point at which the membrane-filtered water amount per time after starting the filtration step of a treatment cycle immediately before the current treatment cycle is stabilized is defined as a second time point,
the transmembrane pressure at the second time point is defined as a second transmembrane pressure,
a value obtained by dividing the second transmembrane pressure by the membrane-filtered water amount per membrane area and per time is defined as a second filtration resistance value,
a value obtained by dividing a difference between the first filtration resistance value and the second filtration resistance value by a time period from the second time point to the first time point is defined as an accumulated additional resistance, and
when the membrane load index becomes greater than or equal to a first threshold value, and the accumulated additional resistance becomes greater than or equal to a second threshold value, administration of the coagulant into the filtration tank is started.

6. The method of administering the coagulant according to any one of claim 1 to claim 5, wherein, in the filtration step, when the membrane-filtered water amount per membrane area and per time becomes less than a third threshold value, the administration of the coagulant into the filtration tank is stopped.

7. A method of administering a coagulant in water treatment, the method defining one treatment cycle as comprising a filtration step for using a filter membrane to filter water to be treated in a treatment tank including a filtration tank having the filter membrane, and a monitoring tank adjacent to the filtration tank, and a filtration stopping step for stopping filtration, and

repeating the treatment cycle to treat the water to be treated,
wherein, when an inflow of the water to be treated flowing into the treatment tank from outside exceeds an extraction amount of membrane-filtered water extracted from the filtration tank to the outside of the treatment tank, and thus a water level in the monitoring tank rises and becomes greater than or equal to a fourth threshold value, administration of the coagulant into the filtration tank is started.

8. The method of administering the coagulant according to claim 7, wherein, when the water to be treated overflowing from the filtration tank flows into the monitoring tank, and the water level in the monitoring tank becomes greater than or equal to the fourth threshold value, the administration of the coagulant into the filtration tank is started.

9. The method of administering the coagulant according to claim 7 or claim 8, wherein, in the filtration step, when the water level of the water to be treated in the monitoring tank becomes less than a fifth threshold value lower than the fourth threshold value, the administration of the coagulant into the filtration tank is stopped.

10. A method of administering a coagulant in water treatment, the method defining one treatment cycle as comprising a filtration step for using a filter membrane to filter water to be treated in a treatment tank including a filtration tank having the filter membrane, and a monitoring tank adjacent to the filtration tank, and a filtration stopping step for stopping filtration, and

repeating the treatment cycle to treat the water to be treated,
wherein, in the filtration step, when an transmembrane pressure becomes greater than or equal to a sixth threshold value, administration of the coagulant into the filtration tank is started.

11. The method of administering the coagulant according to claim 10, wherein, when a predetermined time period elapses after starting the administration of the coagulant, the administration of the coagulant is stopped.

12. The method of administering the coagulant according to claim 11, wherein the predetermined time period is a time period obtained by multiplying an actual residence time of the filtration tank in which the filter membrane is immersed by a value obtained by adding 1 to a circulation ratio,

the actual residence time is a time period required for the coagulant administered to a predetermined administration position of the filtration tank to flow from the filtration tank and return to an original administration position of the filtration tank through the monitoring tank,
the circulation ratio is a value obtained by dividing a circulation amount by an inflow of the water to be treated, and
the circulation amount is a flow rate per time of the water to be treated flowing into the monitoring tank from the filtration tank.

13. A method of administering a coagulant in water treatment, the method defining one treatment cycle as comprising a filtration step for using a filter membrane to filter water to be treated in a filtration tank, and a filtration stopping step for stopping filtration, and repeating the treatment cycle to treat the water to be treated,
wherein, in the filtration step, when a membrane-filtered water amount per membrane area and per time becomes greater than or equal to a seventh threshold value, administration of the coagulant into the filtration tank is started.

14. The method of administering the coagulant according to claim 13, wherein, in the filtration step, when the membrane-filtered water amount per membrane area and per time becomes less than an eighth threshold value lower than the seventh threshold value, the administration of the coagulant into the filtration tank is stopped.

15. A method of administering a coagulant in water treatment, the method defining one treatment cycle as comprising a filtration step for using a filter membrane to filter water to be treated that is supplied to a treatment tank from outside, and a filtration stopping step for stopping filtration, and

repeating the treatment cycle to treat the water to be treated,
wherein, when an inflow of the water to be treated flowing into the treatment tank from the outside exceeds an extraction amount of membrane-filtered water that permeates the filter membrane and is extracted to the outside of the treatment tank, and thus a water level in the treatment tank rises and becomes greater than or equal to a ninth threshold value, administration of the coagulant into the treatment tank is started.

16. The method of administering the coagulant according to claim 15, wherein, in the filtration step, when the water level of the water to be treated in the treatment tank becomes less than a tenth threshold value lower than the ninth threshold value, the administration of the coagulant into the treatment tank is stopped.

**Fig. 1**

Fig. 2

Fig. 3

Fig. 4

WASTE WATER — 2

COAGULANT — 19

$(Q) \rightarrow (2Q)$ — 7

20

$(Q) \rightarrow$ (MAXIMUM MEMBRANE-FILTERED WATER AMOUNT $Q_{max}$) — 17

PERMEATED WATER — 16

2

1

L1

L2

13

11

12

14

Fig. 5

Fig. 6

110

COAGULANT

111

108

109

WATER TO BE TREATED

P

107

P

108
103
104
105

101

102

106

B

Fig. 7

**INTERNATIONAL SEARCH REPORT**

| | International application No. |
|---|---|
| | PCT/JP2021/025301 |

**A. CLASSIFICATION OF SUBJECT MATTER**
Int. Cl. C02F1/44(2006.01)i, C02F1/52(2006.01)i
FI: C02F1/52, C02F1/44

According to International Patent Classification (IPC) or to both national classification and IPC

**B. FIELDS SEARCHED**

Minimum documentation searched (classification system followed by classification symbols)
Int. Cl. B01D21/00-B01D21/34, B01D37/03, C02F1/44, C02F1/52, C02F3/12

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | US 2013/0056412 A1 (CHANG, Sheng) 07 March 2013 (2013-03-07), claims, paragraphs [0016]-[0031], fig. 1 | 1, 13<br>6, 10-11, 14<br>2-5, 12, 15-16 |
| X<br>Y<br>A | JP 2010-513009 A (DEGREMONT) 30 April 2010 (2010-04-30), claims, paragraphs [0052]-[0077], fig. 1-4 | 13-14<br>6, 14<br>1-5, 15-16 |
| Y<br>A | JP 2004-290897 A (TOTO LTD.) 21 October 2004 (2004-10-21), claims, paragraphs [0023]-[0034], fig. 1-6 | 7-9, 15-16<br>1-6, 10-14 |
| Y | JP 4-215887 A (KUBOTA CORP.) 06 August 1992 (1992-08-06), claims, paragraphs [0007]-[0013], fig. 1-4 | 7-11, 15-16 |

| ☒ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01.09.2021 | 14.09.2021 |

| Name and mailing address of the ISA/<br>　Japan Patent Office<br>　3-4-3, Kasumigaseki, Chiyoda-ku,<br>　Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2021/025301 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2018-34077 A (KUBOTA CORP.) 08 March 2018 (2018-03-08), claims, paragraphs [0030]-[0070], fig. 1-7 | 7-11, 15-16 |
| Y | JP 2008-168199 A (HITACHI, LTD.) 24 July 2008 (2008-07-24), claims, paragraphs [0014]-[0041], fig. 1-4 | 10-11 |
| A | JP 2009-233511 A (TORAY INDUSTRIES, INC.) 15 October 2009 (2009-10-15) | 1-16 |
| A | US 2017/0209834 A1 (THE REGENTS OF THE UNIVERSITY OF CALIFORNIA) 27 July 2017 (2017-07-27) | 1-16 |
| A | JP 6-178979 A (KUBOTA CORP.) 28 June 1994 (1994-06-28) | 1-16 |

Form PCT/ISA/210 (continuation of second sheet) (January 2015)

INTERNATIONAL SEARCH REPORT

Information on patent family members

International application No.

PCT/JP2021/025301

| Patent Documents referred to in the Report | Publication Date | Patent Family | Publication Date |
|---|---|---|---|
| US 2013/0056412 A1 | 07.03.2013 | WO 2011/137557 A1<br>CN 102858694 A<br>KR 10-2013-0057442 A | |
| JP 2010-513009 A | 30.04.2010 | US 2010/0032373 A1<br>claims, paragraphs [0085]-[0115], fig. 1-4<br>WO 2008/087300 A2<br>FR 2909903 A1<br>CA 2672769 A1<br>CN 101588858 A | |
| JP 2004-290897 A | 21.10.2004 | (Family: none) | |
| JP 4-215887 A | 06.08.1992 | (Family: none) | |
| JP 2018-34077 A | 08.03.2018 | US 2019/0091632 A1<br>claims, paragraphs [0031]-[0072], fig. 1-7<br>WO 2018/043154 A1<br>EP 3505497 A1 | |
| JP 2008-168199 A | 24.07.2008 | (Family: none) | |
| JP 2009-233511 A | 15.10.2009 | (Family: none) | |
| US 2017/0209834 A1 | 27.07.2017 | (Family: none) | |
| JP 6-178979 A | 28.06.1994 | (Family: none) | |

Form PCT/ISA/210 (patent family annex) (January 2015)

**EP 4 177 223 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015163388 A